# EUROPEAN PATENT APPLICATION

(11) **EP 3 840 517 A1**
(43) Date of publication of application: **23.06.2021**
(21) Application number: 18930175.7
(22) Date of filing: 17.08.2018
(51) Int. Cl.: H04W 74/08

(54) **WINDOW ADJUSTMENT METHOD AND APPARATUS, NETWORK DEVICE AND TERMINAL**

(71) Applicant: GUANGDONG OPPO MOBILE TELECOMMUNICATIONS CORP., LTD., Dongguan Guangdong 523860 (CN)
(72) Inventor: XU, Weijie, Dongguan, Guangdong 523860 (CN)
(74) Representative: RGTH
(86) International application number: PCT/CN2018/101199
(87) International publication number: WO 2020/034224

(57) **Abstract**

The embodiments of the disclosure provide a window adjustment method and apparatus, a network device and a terminal. The method includes that: after a first node receives a first request message from a second node, the first node sends first indication information to the second node, the first indication information being configured to indicate the second node to adjust a first time-domain window for monitoring first feedback information.

## Description

### TECHNICAL FIELD

Embodiments of the disclosure relate to the technical field of mobile communication, and particularly to a window adjustment method and apparatus, a network device and a terminal.

### BACKGROUND

For a random access (RA) process in an unlicensed band, in a time window (called a random access Response (RAR) window) in which User Equipment (UE) monitors a message (Msg) 2, if a base station continuously fails in monitoring when performing Listen Before Talk (LBT) on transmission of the Msg2, then the UE may fail in the random access because of not receiving the Msg2 in the RAR window. In such case, the UE is needed to re-initiate a random access process, and the re-initiated random access process may involve more LBT operations, resulting in a relatively high random access latency and relatively great uncertainties.

In addition, the problem also exists when the base station receives an Msg3 and is prepared to return an Msg4. For example, if the base station continuously fails in monitoring when performing LBT on transmission of the Msg4, the UE may fail in random access due to not receiving the Msg4 in valid duration of a contention resolution timer. In such case, the UE is needed to re-initiate a random access process, and re-initiation of the random access process involves re-execution of LBT and transmission of the Msg1, the Msg2, the Msg3 and the Msg4, resulting in a higher random access latency and greater uncertainties.

### SUMMARY

The embodiments of the disclosure provide a window adjustment method and apparatus, a network device and a terminal.

The embodiments of the disclosure provide a window adjustment method, which may include that:
after a first node receives a first request message from a second node, the first node sends first indication information to the second node, the first indication information being configured to indicate the second node to adjust a first time-domain window for monitoring first feedback information.

The embodiments of the disclosure provide a window adjustment method, which may include that:
after a second node sends a first request message to a first node, the second node receives first indication information from the first node; and
the second node adjusts a first time-domain window for monitoring first feedback information based on the first indication information and monitors the first feedback information in the adjusted first time-domain window.

The embodiments of the disclosure provide a window adjustment apparatus, which may be applied to a first node and include a receiving unit and a sending unit.

The receiving unit may be configured to receive a first request message from a second node.

The sending unit may be configured to send first indication information to the second node, the first indication information being configured to indicate the second node to adjust a first time-domain window for monitoring first feedback information.

The embodiments of the disclosure provide a window adjustment apparatus, which may be applied to a second node and include a sending unit, a receiving unit and an adjustment unit.

The sending unit may be configured to send a first request message to a first node.

The receiving unit may be configured to receive first indication information from the first node.

The adjustment unit may be configured to adjust a first time-domain window for monitoring first feedback information based on the first indication information.

The receiving unit may further be configured to monitor the first feedback information in the adjusted first time-domain window.

The embodiments of the disclosure provide a network device, which may include a processor and a memory. The memory may be configured to store a computer program, and the processor may be configured to call and run the computer program stored in the memory to execute the above window adjustment method.

The embodiments of the disclosure provide a terminal, which may include a processor and a memory. The memory may be configured to store a computer program, and the processor may be configured to call and run the computer program stored in the memory to execute the above window adjustment method.

The embodiments of the disclosure provide a chip, which may be configured to implement the above window adjustment method.

Specifically, the chip may include a processor, configured to call and run a computer program in a memory to cause a device provided with the chip to execute the above window adjustment method.

The embodiments of the disclosure provide a computer-readable storage medium, which may be configured to store a computer program, the computer program causing a computer to execute the above window adjustment method.

The embodiments of the disclosure provide a computer program product, which may include a computer program instruction, the computer program instruction causing a computer to execute the above window adjustment method.

The embodiments of the disclosure provide a computer program, which may run in a computer to enable the computer to execute the above window adjustment method.

According to the technical solutions of the embodiments of the disclosure, the first node is a network device (for example, a base station), and the second node is a terminal (for example, UE). In an unlicensed band, after the base station receives first request information from the UE, the base station may send the first indication information. The UE, after receiving the first indication information, may adjust the first time-domain window for monitoring the first feedback information. The first time-domain window may specifically be a monitoring window such as an RAR window and a contention resolution timer in a random access process. A related parameter of the first time-domain window may be adjusted based on an instruction of the base station only when needed. By such a method, shortcomings brought by restarting of a random access process are overcome, and meanwhile, shortcomings brought by adoption of an RAR window with a fixed great time length or a contention resolution timer with a fixed great time length are also overcome.

### BRIEF DESCRIPTION OF THE DRAWINGS

The drawings described herein are adopted to provide a further understanding to the disclosure and form a part of the disclosure. Schematic embodiments of the disclosure and descriptions thereof are adopted to explain the disclosure and not intended to form improper limits to the disclosure. In the drawings:
FIG. 1 is a schematic architecture diagram of a communication system according to an embodiment of the disclosure.
FIG. 2(a) is a schematic diagram of a contention-based random access process according to an embodiment of the disclosure.
FIG. 2(b) is a schematic diagram of a contention-free random access process according to an embodiment of the disclosure.
FIG. 3 is a first flowchart of a window adjustment method according to an embodiment of the disclosure.
FIG. 4 is a second flowchart of a window adjustment method according to an embodiment of the disclosure.
FIG. 5 is a schematic diagram of extending a length of an RAR monitoring window according to an embodiment of the disclosure.
FIG. 6 is a schematic diagram of resetting an RAR monitoring window according to an embodiment of the disclosure.
FIG. 7 is a schematic diagram of extending a length of a contention resolution timer according to an embodiment of the disclosure.
FIG. 8 is a schematic diagram of restarting a contention resolution timer according to an embodiment of the disclosure.
FIG. 9 is a first structure composition diagram of a window adjustment apparatus according to an embodiment of the disclosure.
FIG. 10 is a second structure composition diagram of a window adjustment apparatus according to an embodiment of the disclosure.
FIG. 11 is a schematic structure diagram of a communication device according to an embodiment of the disclosure.
FIG. 12 is a schematic structure diagram of a chip according to another embodiment of the disclosure.
FIG. 13 is a schematic block diagram of a communication system according to an embodiment of the disclosure.

### DETAILED DESCRIPTION

The technical solutions in the embodiments of the disclosure will be described below in combination with the drawings in the embodiments of the disclosure. It is apparent that the described embodiments are not all embodiments but part of embodiments of the disclosure. All other embodiments obtained by those of ordinary skill in the art based on the embodiments in the disclosure without creative work shall fall within the scope of protection of the disclosure.

The technical solutions of the embodiments of the disclosure may be applied to various communication systems, for example, a Global System of Mobile communication (GSM), a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, LTE Time Division Duplex (TDD), a Universal Mobile Telecommunication System (UMTS), a Worldwide Interoperability for Microwave Access (WiMAX) communication system or a future 5th-Generation (5G) system.

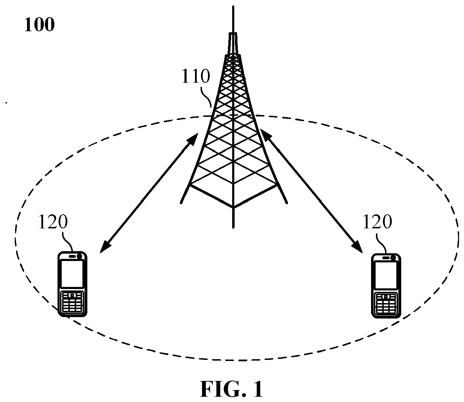

Exemplarily, a communication system 100 that the embodiments of the disclosure are applied to is shown in FIG. 1. The communication system 100 may include a network device 110, and the network device 110 may be a device communicating with a terminal 120 (or called a communication terminal and a terminal). The network device 110 may provide communication coverage for a specific geographical region and may communicate with a terminal located in the coverage. Optionally, the network device 110 may be a Base Transceiver Station (BTS) in the GSM or the CDMA system, may also be a NodeB (NB) in the WCDMA system, or may also be an Evolutional Node B (eNB or eNodeB) in the LTE system or a wireless controller in a Cloud Radio Access Network (CRAN). Or the network device may be a mobile switching center, a relay station, an access point, a vehicle device, a wearable device, a hub, a switch, a network bridge, a router, a network-side device in a future 5G network, a network device in a future evolved Public Land Mobile Network (PLMN) or the like.

The communication system 100 may further include at least one terminal 120 within the coverage of the network device 110. The "terminal" used herein includes, but not limited to, a device configured to receive/send a communication signal through a wired line connection, for example, through Public Switched Telephone Network (PSTN), Digital Subscriber Line (DSL), digital cable and direct cable connections, and/or another data connection/network) and/or through a wireless interface, for example, for a cellular network, a Wireless Local Area Network (WLAN), a digital television network like a Digital Video Broadcasting-Handheld (DVB-H) network, a satellite network and an Amplitude Modulated (AM)-Frequency Modulated (FM) broadcast transmitter, and/or another terminal, and/or an Internet of Things (IoT) device. The terminal configured to communicate through a wireless interface may be called a "wireless communication terminal", a "wireless terminal" or a "mobile terminal". Examples of the mobile terminal include, but not limited to, a satellite or cellular telephone, a Personal Communication System (PCS) terminal capable of combining a cellular radio telephone and data processing, faxing and data communication capabilities, a Personal Digital Assistant (PDA) capable of including a radio telephone, a pager, Internet/intranet access, a Web browser, a notepad, a calendar and/or a Global Positioning System (GPS) receiver, and a conventional laptop and/or palmtop receiver or another electronic device including a radio telephone transceiver. The terminal may refer to an access terminal, UE, a user unit, a user station, a mobile station, a mobile radio station, a remote station, a remote terminal, a mobile device, a user terminal, a terminal, a wireless communication device, a user agent or a user device. The access terminal may be a cell phone, a cordless phone, a Session Initiation Protocol (SIP) phone, a Wireless Local Loop (WLL) station, a PDA, a handheld device with a wireless communication function, a computing device, another processing device connected to a wireless modem, a vehicle device, a wearable device, a terminal in the 5G network, a terminal in the future evolved PLMN or the like.

Optionally, Device to Device (D2D) communication may be performed between the terminals 120.

Optionally, the 5G system or the 5G network may also be called a New Radio (NR) system or an NR network.

A network device and two terminals are exemplarily shown in FIG. 1. Optionally, the communication system 100 may include multiple network devices and another number of terminals may be included in coverage of each network device. No limits are made thereto in the embodiments of the disclosure.

Optionally, the communication system 100 may further include another network entity such as a network controller and a mobility management entity. No limits are made thereto in the embodiments of the disclosure.

It is to be understood that a device with a communication function in the network/system in the embodiments of the disclosure may be called a communication device. For example, for the communication system 100 shown in FIG. 1, communication devices may include the network device 110 and terminal 120 with the communication function. The network device 110 and the terminal 120 may be the specific devices mentioned above and will not be elaborated herein. The communication devices may further include other devices in the communication system 100, for example, other network entities like a network controller and a mobility management entity. No limits are made thereto in the embodiments of the disclosure.

It is to be understood that terms "system" and "network" in the disclosure may usually be exchanged in the disclosure. In the disclosure, term "and/or" is only an association relationship describing associated objects and represents that three relationships may exist. For example, A and/or B may represent three conditions: i.e., independent existence of A, existence of both A and B and independent existence of B. In addition, character "/" in the disclosure usually represents that previous and next associated objects form an "or" relationship.

In order to make the technical solutions of the embodiments of the disclosure convenient to understand, related arts involved in the embodiments of the disclosure will be described below.

### 1) Working mechanism for random access in a licensed spectrum

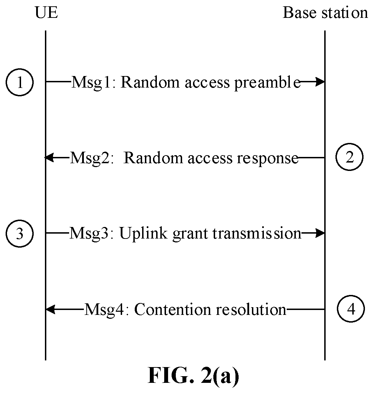

Referring to FIG. 2(a), a contention-based random access process in a licensed band includes the following operations.

In operation (1), UE sends an Msg1 and executes message monitoring in a time window configured through radio resource control (RRC) signaling.

In operation (2), a base station, after receiving the Msg1, feeds back an Msg2.

In operation (3), the UE, after receiving the Msg2, obtains an uplink grant, sends an Msg3 based on the uplink grant and monitors an Msg4 before a contention resolution timer expires.

In operation (4), the base station, after receiving the Msg3, feeds back the Msg4.

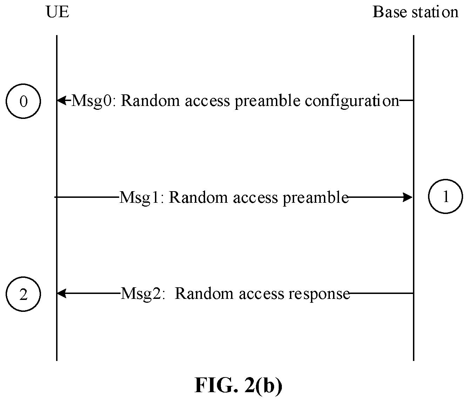

Referring to FIG. 2(b), a contention-free random access process in a licensed band includes the following operations.

In operation (0), a base station sends an Msg0 to UE and configures a parameter required by contention-free random access for the UE through the Msg0, for example, configuring a random access preamble.

In operation (1), the UE sends an Msg1 based on a configuration of the base station and executes an Msg2 monitoring in a time window configured through RRC signaling.

In operation (2), the base station, after receiving the Msg1, feeds back the Msg2.

### 2) LTE Licensed Assisted Access (LAA) and NR-Unlicensed (NR-U) spectrum

For utilization of an unlicensed spectrum, data transmission of a terminal in the unlicensed spectrum is required to meet requirements of some unlicensed band specifications, for example, LBT, namely the terminal or a network is required to listen a channel before data transmission. In a case that detected energy is lower than a certain threshold, it may be considered that the terminal may transmit data in the channel.

LTE supports that an unlicensed spectrum is used in a Carrier Aggregation (CA) manner. Namely, a Primary Cell (PCell) may work in a licensed spectrum and provide a basic access function and a data transmission function, and a Secondary Cell (SCell) may work in the unlicensed spectrum for data boosting. In an LTE LAA working mode, a random access process is executed in the Pcell, therefore, the random access function is not optimized for the unlicensed spectrum.

The NR-U spectrum is required to support the LAA mode as well as a stand-alone working mode. For stand-alone, a random access process is also required to be completed in an unlicensed spectrum. Therefore, random access is not only needed to be further optimized for a requirement of the unlicensed spectrum, but also needed to meet a requirement of access of the unlicensed spectrum, for example, LBT.

### 3) Problems in a random access process in an unlicensed spectrum

First, for the random access process in the unlicensed band, in a time window (called an RAR window) in which UE listens an Msg2, if a base station continuously fails in listening transmission of the Msg2, the UE may fail in the random access due to not receive the Msg2 in the RAR window. In such case, the UE is required to re-initiate a random access process, and the re-initiated random access process may involve more LBT operations, resulting in a relatively high random access latency and relatively great uncertainties.

Second, for solving the above problem, in a case that a greater RAR window length is directly configured through RRC signaling, more LBT opportunities for the base station may be ensured. However, this method also has shortcomings. When a relatively long RAR window is directly configured, if the base station does not receive an Msg1 from the UE or the base station does not expect to respond to the Msg1 of the UE, the UE may keep listening the Msg2 in the relatively long RAR window that is configured. Such listening is unnecessary and unfavorable for reducing the energy consumption of the UE.

In addition, the problem also exists when the base station receives an Msg3 and is prepared to return an Msg4. For example, in a case that the base station fails in continuous listening when performing LBT for transmission of the Msg4, the UE may fail in random access due to not receiving the Msg4 in valid duration of a contention resolution timer. In such case, the UE is required to re-initiate a random access process, and re-initiation of the process involves re-execution of LBT and transmission of the Msg1, the Msg2, the Msg3 and the Msg4, resulting in a higher random access latency and greater uncertainties. Similarly, adopting a contention resolution timer with a greater fixed length may bring problems about the energy consumption of the UE.

In the technical solutions of the embodiments of the disclosure, a related parameter of a related monitoring window such as the abovementioned RAR window and contention resolution timer is adjusted based on an indication of the base station only when needed. By such a method, the abovementioned shortcomings are overcome to a certain extent.

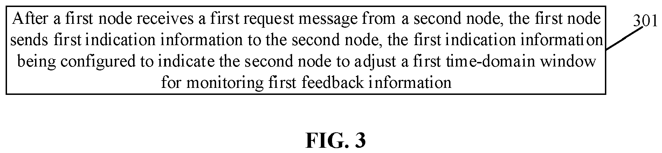

FIG. 3 is a first flowchart of a window adjustment method according to an embodiment of the disclosure. The window adjustment method of the embodiment is applied to a first node. As shown in FIG. 3, the window adjustment method includes the following operation.

In operation 301, after a first node receives a first request message from a second node, the first node sends first indication information to the second node. The first indication information is configured to indicate the second node to adjust a first time-domain window for monitoring first feedback information.

In the embodiment of the disclosure, the first node refers to a base station, including, but not limited to, a gNB in 5G. The second node refers to a terminal. The terminal may be any device capable of communicating with a network, such as a mobile phone, a tablet computer, a vehicle terminal device and a notebook computer.

The technical solution of the embodiment of the disclosure is applied to an unlicensed band. The base station, when sending information to the terminal in an unlicensed band, is required to follow an LBT principle. For the scenario that the terminal sends the first request message to the base station and is required to monitor the first feedback information from the base station in the first time-domain window, the first time-domain window may be adjusted by use of the technical solution of the embodiment of the disclosure. Specifically, after the first node receives the first request message from the second node, the first node may send the first indication information to the second node. The first indication information is configured to indicate the second node to adjust the first time-domain window for monitoring the first feedback information.

In an implementation mode, the first node may send the first indication information based on a first judgment condition. Herein, the first judgment condition may include that: when the first node is required to occupy a first transmission resource for transmission of information with first priority, the first node judges whether a channel is idle and/or available or not according to a listening result of energy of the channel. For example, the first judgment condition may include that: when the first node is required to occupy a relatively small number of transmission resources for transmission of information with relatively high priority, the first node determines whether the present channel is idle and available or not by listening the present channel.

In the embodiment of the disclosure, the first node may send the first indication information to the second node in the following manners.
1) The first node sends the first indication information to the second node through downlink control information (DCI); or,
2) the first node sends the first indication information to the second node through a downlink data channel (for example, a Physical Downlink Shared Channel (PDSCH)) scheduled by the DCI; or,
3) the first node sends the first indication information to the second node by pre-configured sequence transmission.

In the embodiment of the disclosure, a position where the first node sends the first indication information may be a subset of candidate transmission positions corresponding to the first indication information. Furthermore, each candidate transmission position corresponding to the first indication information may have at least one of following features:
the candidate transmission position of the first indication information has a periodic characteristic in time, and a period corresponding to the candidate transmission position is determined based on a first parameter;
an offset of the candidate transmission position of the first indication information relative to reference time in a period is determined based on a second parameter. Herein, the reference time may be starting time of the period; and
a duration of the candidate transmission position of the first indication information in a period is determined based on a third parameter.

For example, the first parameter is T_ind, the second parameter is O_ind, the third parameter is D_ind, and each candidate transmission position periodically appearing in time may be determined based on the three parameters.

The technical solution of the embodiment of the disclosure may be applied to a random access process. The random access process may be a contention-based random access process or may also be a contention-free random access process. For the contention-based random access process, the first request message may be an Msg1 and the first feedback information may be an Msg2. Or, the first request message may be an Msg3 and the first feedback information may be an Msg4. For the contention-free random access process, the first request message refers to the Msg1 and the first feedback information refers to the Msg2.

In an implementation mode, the first request message may include the Msg1 in the random access process, and the first feedback information may include the Msg2 in the random access process. In such case, configuration information of a control resource set (CORESET) and configuration information of search space for the Msg2 may be adopted as configuration information of the candidate transmission positions corresponding to the first indication information.

In another implementation mode, the first request message may include the Msg3 in the random access process, and the first feedback information may include the Msg4 in the random access process. In such case, configuration information of a CORESET and configuration information of search space for the Msg4 may be adopted as the configuration information of the candidate transmission positions corresponding to the first indication information.

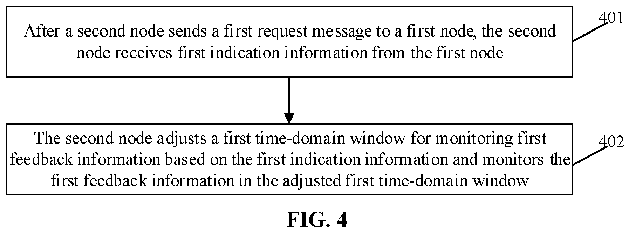

FIG. 4 is a second flowchart of a window adjustment method according to an embodiment of the disclosure. The window adjustment method of the embodiment is applied to a second node. As shown in FIG. 4, the window adjustment method includes the following operations.

In operation 401, after the second node sends a first request message to a first node, the second node receives first indication information from the first node.

In the embodiment of the disclosure, the first node refers to a base station, including, but not limited to, a gNB in 5G. The second node refers to a terminal. The terminal may be any device capable of communicating with a network, such as a mobile phone, a tablet computer, a vehicle terminal device and a notebook computer.

The technical solution of the embodiment of the disclosure is applied to an unlicensed band. The base station, when sending information to the terminal in the unlicensed band, is required to follow an LBT principle. For the scenario that the terminal sends the first request message to the base station and is required to monitor first feedback information from the base station in a first time-domain window, the first time-domain window may be adjusted by use of the technical solution of the embodiment of the disclosure. Specifically, after the second node sends the first request message to the first node, the second node may receive the first indication information from the first node, and the second node may adjust the first time-domain window for monitoring the first feedback information based on the first indication information.

In the embodiment of the disclosure, the second node may receive the first indication information in the following manners:
1) the second node acquires the first indication information through DCI; or,
2) the second node acquires the first indication information through a downlink data channel (for example, a PDSCH) scheduled by the DCI; or,
3) the second node acquires the first indication information by pre-configured sequence transmission.

In the embodiment of the disclosure, a position where the second node receives the first indication information may be a subset of candidate transmission positions corresponding to the first indication information. Furthermore, each candidate transmission position corresponding to the first indication information may have at least one of the following features:
the candidate transmission position of the first indication information has a periodic characteristic in time, and a period corresponding to the candidate transmission position is determined based on a first parameter;
an offset of the candidate transmission position of the first indication information relative to reference time in a period is determined based on a second parameter; and
a duration of the candidate transmission position of the first indication information in a period is determined based on a third parameter.

For example, the first parameter is T_ind, the second parameter is O_ind, the third parameter is D_ind, and each candidate transmission position periodically appearing in time may be determined based on the three parameters.

In the embodiment of the disclosure, the second node may acquire information of the candidate transmission positions in the following manners:
1) the second node obtains information of all or part of the candidate transmission positions corresponding to the first indication information through broadcast information; or,
2) the second node obtains the information of all or part of the candidate transmission positions corresponding to the first indication information through RRC dedicated signaling; or,
3) the second node obtains the information of all or part of the candidate transmission positions corresponding to the first indication information through pre-configured information.

In operation 402, the second node adjusts a first time-domain window for monitoring first feedback information based on the first indication information and monitors the first feedback information in the adjusted first time-domain window.

In the embodiment of the disclosure, the operation that the second node adjusts the first time-domain window for monitoring the first feedback information based on the first indication information may include the following implementation modes.

A first implementation mode may be that: the second node re-enables a first time-domain window configured to monitor the first feedback information, the re-enabled first time-domain window having a first time-domain window length and the first time-domain window length being configured for the second node by the first node; or, the second node resets a first time-domain window timer configured to monitor the first feedback information, the reset first time-domain window timer having a first time-domain window timer length and the first time-domain window timer length being configured for the second node by the first node.

For example, the second node, after receiving the first indication information, may re-enable a first time-domain window configured to monitor the first feedback information. The length of the re-enabled first time-domain window may be equal to W1 and W1 is a first time-domain window length configured for the second node by the first node.

For another example, the second node, after receiving the first indication information, may reset a first time-domain window timer configured to monitor the first feedback information. The length of the reset first time-domain window timer may be equal to W2 and W2 is a first time-domain window timer length configured for the second node by the first node.

A second implementation mode may be that: the second node re-enables a first time-domain window configured to monitor the first feedback information, the re-enabled first time-domain window having a first time-domain window length and the first time-domain window length being determined based on a first time-domain window length presently used by the second node and a first coefficient; or, the second node resets a first time-domain window timer configured to monitor the first feedback information, the reset first time-domain window timer having a first time-domain window timer length and the first time-domain window timer length being determined based on a first time-domain window timer length presently used by the second node and a second coefficient.

For example, the second node, after receiving the first indication information, may re-enable a first time-domain window configured to monitor the first feedback information. The length of the re-enabled first time-domain window may be equal to W3, where W3=W5^{∗}N. W5 is a first time-domain window length presently used by the second node and N is a pre-configured positive number.

For another example, the second node, after receiving the first indication information, may reset a first time-domain window timer configured to monitor the first feedback information. The length of the reset first time-domain window timer may be equal to W4, where W4=W6^{∗}N. W6 is a first time-domain window timer length presently set by the second node and N is a pre-configured positive number.

A third implementation mode may be that: the second node extends the first time-domain window length presently used by the second node by k time units, k being a positive integer; or, the second node extends the first time-domain window timer length presently used by the second node by m time units, m being a positive integer.

In the third implementation mode, a granularity of the time unit is absolute time (for example, milliseconds (ms)) or a slot.

For example, the second node, after receiving the first indication information, may extend the present first time-domain window length by k1 slots, k1 being a pre-configured positive integer.

For another example, the second node, after receiving the first indication information, may extend the present first time-domain window timer length by k2 slots, k2 being a pre-configured positive integer.

For another example, the second node, after receiving the first indication information, may extend the present first time-domain window length by m1 ms, m1 being a pre-configured positive number.

For another example, the second node, after receiving the first indication information, may extend the present first time-domain window timer length by m2 ms, m2 being a pre-configured positive number.

In the solution, the first time-domain window length presently used by the second node may be obtained through broadcast information; or, the first time-domain window length presently used by the second node may be obtained through RRC dedicated signaling.

In the solution, the first time-domain window timer length presently used by the second node may be obtained through the broadcast information; or, the first time-domain window timer length presently used by the second node may be obtained through the RRC dedicated signaling.

The technical solution of the embodiment of the disclosure may be applied to an random access process. The random access process may be a contention-based random access process or may also be a contention-free random access process. For the contention-based random access process, the first request message may be an Msg1 and the first feedback information may be an Msg2. Or, the first request message may be an Msg3 and the first feedback information may be an Msg4. For the contention-free random access process, the first request message refers to the Msg1 and the first feedback information refers to the Msg2.

In an implementation mode, the first request message may include the Msg1 in the random access process, and the first feedback information may include the Msg2 in the random access process. In such case, configuration information of a control resource set (CORESET) and configuration information of search space for the Msg2 may be adopted as configuration information of the candidate transmission positions corresponding to the first indication information.

In another implementation mode, the first request message may include the Msg3 in the random access process, and the first feedback information may include the Msg4 in the random access process. In such case, configuration information of a CORESET and configuration information of search space for the Msg4 may be adopted as the configuration information of the candidate transmission positions corresponding to the first indication information.

In an implementation mode, the second node may continue monitoring the first indication information in the adjusted first time-domain window. Furthermore, when the second node detects new first indication information in the adjusted first time-domain window, the second node may adjust the first time-domain window configured to monitor the first feedback information again.

The technical solution of the embodiment of the disclosure will further be described below in combination with specific disclosure examples. All the following disclosure examples are applied to an unlicensed band.

### A first application example

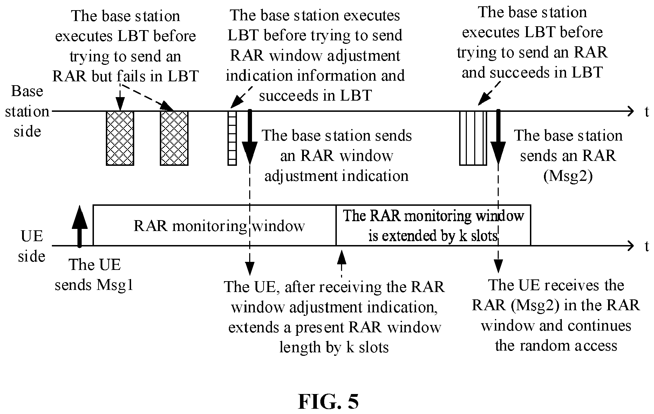

Referring to FIG. 5, FIG. 5 is a schematic diagram of extending a length of an RAR monitoring window. In combination with FIG. 5, the technical solution of the embodiment of the disclosure may be implemented through the following operations.

In operation (1), UE obtains a configured length W1=20 slots of an RAR window (ra_ResponseWindow=s120) and obtains another configured parameter needed for random access through broadcast information.

In operation (2), the UE obtains a monitoring position for monitoring an RAR window adjustment indication (first indication information) through the broadcast information. For the monitoring position, a period T_ind of the monitoring position is equal to 5 slots, an offset O ind in a period is equal to 1 slot, and a duration D ind is equal to 1 symbol. The monitoring position is also a candidate sending position where a base station sends the RAR window adjustment indication.

In operation (3), the UE initiates random access to the base station based on the configured parameters, and the UE sends an Msg1 to the base station.

In operation (4), when the base station cannot obtain an idle channel resource to directly return an Msg2, the base station monitors whether there is an available idle channel resource at the candidate sending positions for monitoring the RAR window adjustment indication or not based on an LBT mechanism. If there is an available idle channel resource, the base station sends the RAR window adjustment indication on the available resource.

In operation (5), the base station sends the RAR window adjustment indication through DCI to indicate the UE to extend a present RAR window length by k=10 slots.

In operation (6), the UE listens the RAR window adjustment indication at the RAR window monitoring position, and after the UE receives the RAR window adjustment indication, the UE extends a present RAR window configured to monitor the Msg2 by k=10 slots.

In operation (7), the UE continues listening the Msg2 in the extended RAR window.

In operation (8), after the UE detects RAR window adjustment indication information again in the extended RAR window, the UE extends the present adjusted RAR window configured to monitor the Msg2 by k=10 slots again.

### A second application example

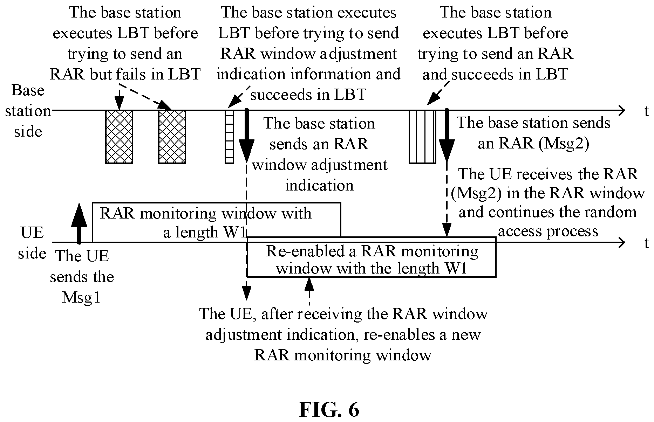

Referring to FIG. 6, FIG. 6 is a schematic diagram of resetting an RAR monitoring window. In combination with FIG. 6, the technical solution of the embodiment of the disclosure may be implemented through the following operations.

In operation (1), UE obtains a configured length W1=20 slots of an RAR window (ra_ResponseWindow=s120) and obtains another configured parameter needed for random access through RRC dedicated signaling.

In operation (2), the UE obtains a monitoring position for monitoring an RAR window adjustment instruction (first indication information) through the RRC dedicated signaling. For the monitoring position, a period T_ind of the monitoring position is equal to 5 slots, an offset O_ind in a period is equal to 1 slot, and a duration D_ind is equal to 1 symbol. The monitoring position is also a candidate sending position where a base station sends the RAR window adjustment instruction.

In operation (3), the UE initiates random access to the base station based on the configured parameters, and the UE sends an Msg1 to the base station.

In operation (4), when the base station cannot obtain an idle channel resource to directly return an Msg2, the base station monitors whether there is an available idle channel resource at the candidate sending position for monitoring the RAR window adjustment indication or not based on an LBT mechanism, and if there is an available idle channel resource, the base station sends the RAR window adjustment indication on the available resource.

In operation (5), the base station sends the RAR window adjustment indication through a preset sequence A to indicate the UE to re-enable an RAR window, the re-enabled RAR window starting from a first slot after a moment when the UE receives the RAR window adjustment indication and having a window length W1=20 slots.

In operation (6), the UE listens the RAR window adjustment indication at the RAR monitoring position, and after the UE receives the RAR window adjustment indication, the UE re-enables the RAR window, the re-enabled RAR window starting from the first slot after the moment when the RAR window adjustment indication is received and having the window length W1=20 slots.

In operation (7), the UE continues listening the Msg2 in the extended RAR window.

In operation (8), after the UE detects RAR window adjustment indication information again in the extended RAR window, the UE re-enables an RAR window, the re-enabled RAR window starting from a first slot after a moment when the UE receives the RAR window adjustment instruction and having a window length W1=20 slots.

### A third application example

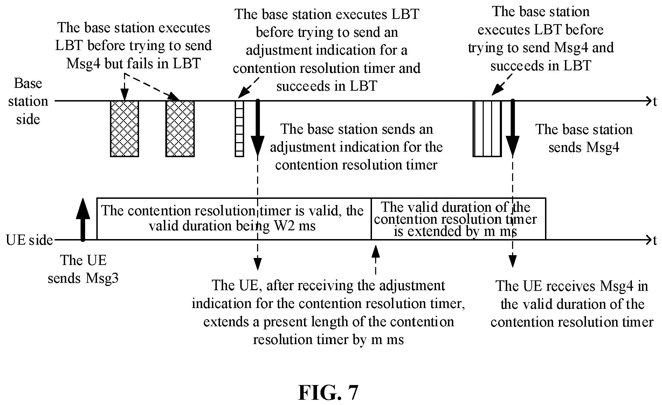

Referring to FIG. 7, FIG. 7 is a schematic diagram of extending a length of a contention resolution timer. In combination with FIG. 7, the technical solution of the embodiment of the disclosure may be implemented through the following operations.

In operation (1), UE obtains a configured length W2=24ms (ra-ContentionResolutionTimer=sf24) of a contention resolution timer and obtains another configured parameter needed for random access through broadcast information.

In operation (2), the UE obtains a monitoring position for monitoring an adjustment indication for the contention resolution timer (first indication information) through the broadcast information. For the monitoring position, a period T_ind of the monitoring position is equal to 5 slots, an offset O_ind in a period is equal to 1 slot, and a duration D_ind is equal to 1 symbol. The monitoring position is also a candidate sending position where a base station sends an RAR window adjustment indication.

In operation (3), the UE initiates contention-based random access to the base station based on the configured parameters, the UE sends an Msg1 to the base station, the base station returns an Msg2 to the UE, and the UE sends an Msg3 to the base station and starts a contention resolution timer based on a configured length of the contention resolution timer.

In operation (4), when the base station cannot obtain an idle channel resource to directly return an Msg4, the base station monitors whether there is an available idle channel resource at the candidate sending position for monitoring the adjustment indication for the contention resolution timer or not based on an LBT mechanism, and if there is an available idle channel resource, the base station sends the adjustment indication for the contention resolution timer on the available resource.

In operation (5), the base station sends the adjustment indication for the contention resolution timer through DCI to indicate the UE to extend a present contention resolution timer length by m=16ms.

In operation (6), the UE listens the adjustment indication for the contention resolution timer at the monitoring position for the adjustment indication for the contention resolution timer, and after the UE receives the adjustment indication for the contention resolution timer, the UE extends the present time length of the contention resolution timer by m=16ms.

In operation (7), the UE continues listening the Msg4 in extended valid duration of the contention resolution timer.

In operation (8), after the UE detects a contention resolution timer adjustment instruction again in the extended valid duration of the contention resolution timer, the UE extends the present adjusted contention resolution timer by m=16ms again.

### A fourth application example

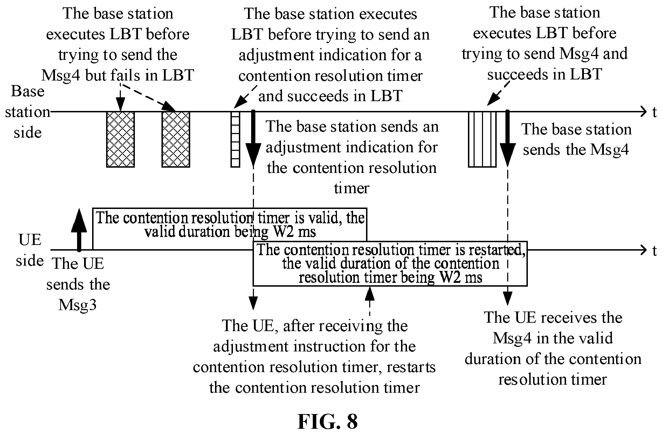

Referring to FIG. 8, FIG. 8 is a schematic diagram of restarting a contention resolution timer. In combination with FIG. 8, the technical solution of the embodiment of the disclosure may be implemented through the following operations.

In operation (1), UE obtains a configured length W2=24ms (ra-ContentionResolutionTimer=sf24) of a contention resolution timer and obtains another configured parameter needed for random access through RRC dedicated signaling.

In operation (2), the UE obtains a monitoring position for monitoring an adjustment indication for the contention resolution timer (first indication information) through the RRC dedicated signaling. For the monitoring position, a period T_ind of the monitoring position is equal to 5 slots, an offset O_ind in a period is equal to 1 slot, and a duration D_ind is equal to 1 symbol. The monitoring position is also a candidate sending position where a base station sends an RAR window adjustment indication.

In operation (3), the UE initiates contention-based random access to the base station based on the configured parameters, the UE sends an Msg1 to the base station, the base station returns an Msg2 to the UE, and the UE sends an Msg3 to the base station and starts a contention resolution timer based on a configured length of the contention resolution timer.

In operation (4), when the base station cannot obtain an idle channel resource to directly return an Msg4, the base station monitors whether there is an available idle channel resource at the candidate sending position for monitoring the adjustment indication for the contention resolution timer or not based on an LBT mechanism, and if there is an available idle channel resource, the base station sends the adjustment indiciation for the contention resolution timer on the available resource.

In operation (5), the base station sends the adjustment indication for the contention resolution timer through a preset sequence A to indicate the UE to restart the presently running contention resolution timer, a length of the timer being W2=24ms.

In operation (6), the UE listens the adjustment indication for the contention resolution timer at the monitoring position for the adjustment indication for the contention resolution timer, and after the UE receives the adjustment indication for the contention resolution timer, the UE restarts the presently running contention resolution timer, the length of the timer being W2=24ms.

In operation (7), the UE continues listening the Msg4 in extended valid duration of the contention resolution timer.

In operation (8), after the UE detects an adjustment instruction for the contention resolution timer again in the extended valid duration of the contention resolution timer, the UE restarts the presently running contention resolution timer, the length of the timer being W2=24ms.

According to the technical solution of the embodiment of the disclosure, in a time window where the UE monitors the Msg2, if the base station continuously fails in performing LBT on transmission of the Msg2, the base station may execute LBT to judge whether there is a brief available channel opportunity or not, and the base station may further send indication information by use of the brief available channel opportunity to notify the UE that the present condition is that the Msg1 has been received, the base station has prepared the Msg2 and the base station is waiting for an opportunity of successful LBT. After the UE receives the indication information, the length of the RAR window of the UE may be adjusted. After the base station succeeds in LBT, the Msg2 may be sent to the UE. By such a method, shortcomings brought by restarting of a random access channel (RACH) are overcome, and meanwhile, shortcomings brought by adoption of an RAR window with a fixed great time length are also overcome. Similarly, in the contention resolution timer for listening Msg4 by the UE, if the base station continuously fails in performing LBT on transmission of the Msg4, the base station may execute LBT to judge whether there is a brief available channel opportunity or not and send indication information by use of the brief available channel opportunity to notify the UE that the present condition is that the Msg3 has been received, the base station has prepared the Msg4 and the base station is waiting for an opportunity of successful LBT. After the UE receives the indication information, a state of the contention resolution timer may be adjusted. After the base station succeeds in LBT, the Msg4 may be sent to the UE. By such a method, the shortcomings brought by restarting of RACH are overcome, and meanwhile, shortcomings brought by adoption of a contention resolution timer with a fixed great length are also overcome.

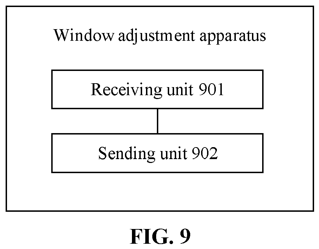

FIG. 9 is a first structure composition diagram of a window adjustment apparatus according to an embodiment of the disclosure. The apparatus is applied to a first node. As shown in FIG. 9, the apparatus may include a receiving unit 901 and a sending unit 902.

The receiving unit 901 is configured to receive a first request message from a second node.

The sending unit 902 is configured to send first indication information to the second node, the first indication information being configured to indicate the second node to adjust a first time-domain window for monitoring first feedback information.

In an implementation mode, the sending unit 902 is configured to send the first indication information based on a first judgment condition.

In an implementation mode, the first judgment condition may include:
judging, by the first node, whether a channel is idle and/or available or not based on a listening result of energy of the channel, when the first node is required to occupy a first transmission resource for transmission of information with first priority.

In an implementation mode, the sending unit 902 is configured to send the first indication information to the second node through DCI, or, send the first indication information to the second node through a downlink data channel scheduled by the DCI, or, send the first indication information to the second node by pre-configured sequence transmission.

In an implementation mode, a position where the sending unit 902 sends the first indication information may be a subset of candidate transmission positions corresponding to the first indication information.

In an implementation mode, the candidate transmission position corresponding to the first indication information may have at least one of the following features:
the candidate transmission position of the first indication information has a periodic characteristic in time, and a period corresponding to the candidate transmission position is determined based on a first parameter;
an offset of the candidate transmission position of the first indication information relative to reference time in a period is determined based on a second parameter; and
a duration of the candidate transmission position of the first indication information in a period is determined based on a third parameter.

In an implementation mode, the first request message may include an Msg1 in an random access process.

In an implementation mode, the first feedback information may include an Msg2 in the random access process.

In an implementation mode, configuration information of a CORESET and configuration information of search space for the Msg2 may be adopted as configuration information of the candidate transmission positions corresponding to the first indication information.

In an implementation mode, the first request message may include an Msg3 in the random access process.

In an implementation mode, the first feedback information may include an Msg4 in the random access process.

In an implementation mode, configuration information of a CORESET and configuration information of search space for the Msg4 may be adopted as the configuration information of the candidate transmission positions corresponding to the first indication information.

It is understood by those skilled in the art that the related descriptions about the window adjustment apparatus of the embodiment of the disclosure may be understood with reference to the related descriptions about the window adjustment method of the embodiments of the disclosure.

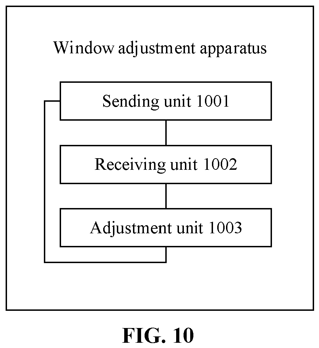

FIG. 10 is a second structure composition diagram of a window adjustment apparatus according to an embodiment of the disclosure. The apparatus is applied to a second node, and as shown in FIG. 10, includes a sending unit 1001, a receiving unit 1002 and an adjustment unit 1003.

The sending unit 1001 is configured to send a first request message to a first node.

The receiving unit 1002 is configured to receive first indication information from the first node.

The adjustment unit 1003 is configured to adjust a first time-domain window for monitoring first feedback information based on the first indication information.

The receiving unit 1002 is further configured to monitor the first feedback information in the adjusted first time-domain window.

In an implementation mode, the receiving unit 1002 is configured to acquire the first indication information through DCI, or, acquire the first indication information through a downlink data channel scheduled by the DCI, or, acquire the first indication information by pre-configured sequence transmission.

In an implementation mode, a position where the receiving unit 1002 receives the first indication information may be a subset of candidate transmission positions corresponding to the first indication information.

In an implementation mode, the candidate transmission position corresponding to the first indication information may have at least one of the following features:
the candidate transmission position of the first indication information has a periodic characteristic in time, and a period corresponding to the candidate transmission position is determined based on a first parameter;
an offset of the candidate transmission position of the first indication information relative to reference time in a period is determined based on a second parameter; and
a duration of the candidate transmission position of the first indication information in a period is determined based on a third parameter.

In an implementation mode, the apparatus may further include an acquisition unit.

The acquisition unit is configured to obtain information of all or part of the candidate transmission positions corresponding to the first indication information through broadcast information, or, obtain the information of all or part of the candidate transmission positions corresponding to the first indication information through RRC dedicated signaling, or, obtain the information of all or part of the candidate transmission positions corresponding to the first indication information through pre-configured information.

In an implementation mode, the adjustment unit 1003 is configured to re-enable a first time-domain window configured to monitor the first feedback information, the re-enabled first time-domain window having a first time-domain window length and the first time-domain window length being configured for the second node by the first node, or, reset a first time-domain window timer configured to monitor the first feedback information, the reset first time-domain window timer having a first time-domain window timer length and the first time-domain window timer length being configured for the second node by the first node.

In an implementation mode, the adjustment unit 1003 is configured to re-enable a first time-domain window configured to monitor the first feedback information, the re-enabled first time-domain window having a first time-domain window length and the first time-domain window length being determined based on a first time-domain window length presently used by the second node and a first coefficient, or, reset a first time-domain window timer configured to monitor the first feedback information, the reset first time-domain window timer having a first time-domain window timer length and the first time-domain window timer length being determined based on a first time-domain window timer length presently used by the second node and a second coefficient.

In an implementation mode, the adjustment unit 1003 is configured to extend a first time-domain window length presently used by the second node by k time units, k being a positive integer, or, extend a first time-domain window timer length presently used by the second node by m time units, m being a positive integer.

In an implementation mode, a granularity of the time unit may be absolute time or a slot.

In an implementation mode, the first time-domain window length presently used by the second node may be obtained through broadcast information; or,
the first time-domain window length presently used by the second node may be obtained through RRC dedicated signaling.

In an implementation mode, the first time-domain window timer length presently used by the second node may be obtained through broadcast information; or,
the first time-domain window timer length presently used by the second node may be obtained through RRC dedicated signaling.

In an implementation mode, the first request message may include an Msg1 in an random access process.

In an implementation mode, the first feedback information may include an Msg2 in the random access process.

In an implementation mode, configuration information of a CORESET and configuration information of search space for the Msg2 may be adopted as configuration information of candidate transmission positions corresponding to the first indication information.

In an implementation mode, the first request message may include an Msg3 in the random access process.

In an implementation mode, the first feedback information may include an Msg4 in the random access process.

In an implementation mode, configuration information of a CORESET and configuration information of search space for the Msg4 may be adopted as the configuration information of candidate transmission positions corresponding to the first indication information.

In an implementation mode, the receiving unit 1002 is further configured to continue monitoring the first indication information in the adjusted first time-domain window.

In an implementation mode, in response to the receiving unit 1002 detecting new first indication information in the adjusted first time-domain window, the adjustment unit 1003 is configured to adjust the first time-domain window configured to monitor the first feedback information again.

It is understood by those skilled in the art that the related descriptions about the window adjustment apparatus of the embodiment of the disclosure may be understood with reference to the related descriptions about the window adjustment method of the embodiments of the disclosure.

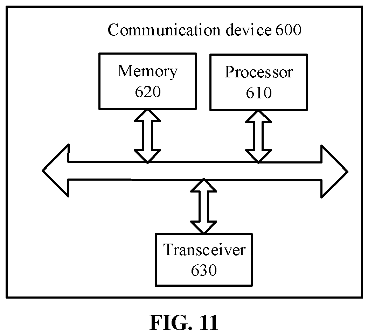

FIG. 11 is a schematic structure diagram of a communication device 600 according to an embodiment of the disclosure. The communication device may be a terminal or may also be a network device. The communication device 600 shown in FIG. 11 includes a processor 610, and the processor 610 may call and run a computer program in a memory to implement the method in the embodiments of the disclosure.

Optionally, as shown in FIG. 11, the communication device 600 may further include a memory 620. The processor 610 may call and run the computer program in the memory 620 to implement the method in the embodiments of the disclosure.

The memory 620 may be a device independent of the processor 610 or may also be integrated into the processor 610.

Optionally, as shown in FIG. 11, the communication device 600 may further include a transceiver 630. The processor 610 may control the transceiver 630 to communicate with another device, specifically sending information or data to another device or receiving information or data from another device.

The transceiver 630 may include a transmitter and a receiver. The transceiver 630 may further include antennae, The number of the antennae may be one or more.

Optionally, the communication device 600 may specifically be the network device of the embodiments of the disclosure. The communication device 600 may implement corresponding flows implemented by the network device in each method of the embodiments of the disclosure. For simplicity, elaborations are omitted herein.

Optionally, the communication device 600 may specifically be the mobile terminal/terminal of the embodiments of the disclosure. The communication device 600 may implement corresponding flows implemented by the mobile terminal/terminal in each method of the embodiments of the disclosure. For simplicity, elaborations are omitted herein.

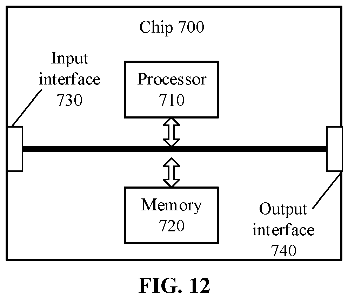

FIG. 12 is a schematic structure diagram of a chip according to another embodiment of the disclosure. The chip 700 shown in FIG. 12 includes a processor 710. The processor 710 may call and run a computer program in a memory to implement the method in the embodiments of the disclosure.

Optionally, as shown in FIG. 12, the chip 700 may further include the memory 720. The processor 710 may call and run the computer program in the memory 720 to implement the method in the embodiments of the disclosure.

The memory 720 may be independent of the processor 710 or may also be integrated into the processor 710.

Optionally, the chip 700 may further include an input interface 730. The processor 710 may control the input interface 730 to communicate with another device or chip, specifically acquiring information or data from another device or chip.

Optionally, the chip 700 may further include an output interface 740. The processor 710 may control the output interface 740 to communicate with the another device or chip, specifically outputting information or data from the another device or chip.

Optionally, the chip may be applied to the network device of the embodiments of the disclosure. The chip may implement corresponding flows implemented by the network device in each method of the embodiments of the disclosure. For simplicity, elaborations are omitted herein.

Optionally, the chip may be applied to the mobile terminal/terminal of the embodiment of the disclosure. The chip may implement corresponding flows implemented by the mobile terminal/terminal in each method of the embodiments of the disclosure. For simplicity, elaborations are omitted herein.

It is to be understood that the chip mentioned in the embodiment of the disclosure may also be called a system-level chip, a system chip, a chip system or a system on chip, etc.

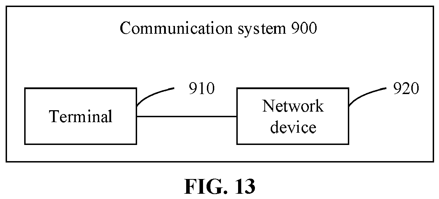

FIG. 13 is a second block diagram of a communication system 900 according to an embodiment of the disclosure. As shown in FIG. 13, the communication system 900 includes a terminal 910 and a network device 920.

The terminal 910 may be configured to realize corresponding functions realized by the terminal in the method. The network device 920 may be configured to realize corresponding functions realized by the network device in the method. For simplicity, elaborations are omitted herein.

It is to be understood that the processor in the embodiment of the disclosure may be an integrated circuit chip and has a signal processing capacity. In an implementation process, each operation of the method embodiments may be completed by an integrated logical circuit of hardware in the processor or an instruction in a software form. The processor may be a universal processor, a Digital Signal Processor (DSP), an Application Specific Integrated Circuit (ASIC), a Field Programmable Gate Array (FPGA) or another programmable logical device, discrete gate or transistor logical device and discrete hardware component. Each method, operation and logical block diagram disclosed in the embodiments of the disclosure may be implemented or executed. The universal processor may be a microprocessor or the processor may also be any conventional processor and the like. The operations of the method disclosed in combination with the embodiments of the disclosure may be directly embodied to be executed and completed by a hardware decoding processor or executed and completed by a combination of hardware and software modules in the decoding processor. The software module may be located in a mature storage medium in this field such as a Random Access Memory (RAM), a flash memory, a Read-Only Memory (ROM), a Programmable ROM (PROM) or Electrically Erasable PROM (EEPROM) and a register. The storage medium is located in a memory, and the processor reads information in the memory, and completes the operations of the method in combination with hardware.

It can be understood that the memory in the embodiment of the disclosure may be a volatile memory or a nonvolatile memory, or may include both the volatile and nonvolatile memories. The nonvolatile memory may be a ROM, a PROM, an Erasable PROM (EPROM), an EEPROM or a flash memory. The volatile memory may be a RAM, and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DR RAM). It is to be noted that the memory of a system and method described in the disclosure is intended to include, but not limited to, memories of these and any other proper types.

It is to be understood that the memory is exemplarily but unlimitedly described. For example, the memory in the embodiments of the disclosure may also be an SRAM, a DRAM, an SDRAM, a DDR SDRAM, an ESDRAM, an SLDRAM and a DR RAM That is, the memory in the embodiments of the disclosure is intended to include, but not limited to, memories of these and any other proper types.

The embodiments of the disclosure also provide a computer-readable storage medium, which is configured to store a computer program.

Optionally, the computer-readable storage medium may be applied to a network device in the embodiments of the disclosure. The computer program enables a computer to execute corresponding flows implemented by the network device in each method of the embodiments of the disclosure. For simplicity, elaborations are omitted herein.

Optionally, the computer-readable storage medium may be applied to a mobile terminal/terminal in the embodiments of the disclosure. The computer program enables a computer to execute corresponding flows implemented by the mobile terminal/terminal in each method of the embodiments of the disclosure. For simplicity, elaborations are omitted herein.

The embodiments of the disclosure also provide a computer program product, which includes a computer program instruction.

Optionally, the computer program product may be applied to a network device in the embodiments of the disclosure. The computer program instruction enables a computer to execute corresponding flows implemented by the network device in each method of the embodiments of the disclosure. For simplicity, elaborations are omitted herein.

Optionally, the computer program product may be applied to a mobile terminal/terminal in the embodiments of the disclosure. The computer program instruction enables the computer to execute corresponding flows implemented by the mobile terminal/terminal in each method of the embodiments of the disclosure. For simplicity, elaborations are omitted herein.

The embodiments of the disclosure also provide a computer program.

Optionally, the computer program may be applied to a network device in the embodiments of the disclosure. The computer program runs in a computer to enable the computer to execute corresponding flows implemented by the network device in each method of the embodiments of the disclosure. For simplicity, elaborations are omitted herein.

Optionally, the computer program may be applied to a mobile terminal/terminal in the embodiments of the disclosure. The computer program runs in the computer to enable the computer to execute corresponding flows implemented by the mobile terminal/terminal in each method of the embodiments of the disclosure. For simplicity, elaborations are omitted herein.

Those of ordinary skill in the art may realize that the units and algorithm steps of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the disclosure.

Those skilled in the art may clearly learn about that specific working processes of the system, device and unit described above may refer to the corresponding processes in the method embodiment and will not be elaborated herein for convenient and brief description.

In some embodiments provided by the disclosure, it is to be understood that the disclosed system, device and method may be implemented in another manner. For example, the apparatus embodiments described above are only schematic. For example, division of the units is only logic function division. Other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the apparatus or the units, and may be electrical and mechanical or adopt other forms.

The units described as separate parts may or may not be physically separated. The parts displayed as units may or may not be physical units, namely, may be located in the same place, or may also be distributed to multiple network units. Part or all of the units may be selected to achieve the purpose of the solutions of the embodiments according to a practical requirement.

In addition, each functional unit in each embodiment of the disclosure may be integrated into a processing unit. Each unit may also physically exist independently. Two or more than two units may also be integrated into a unit.

When being realized in form of software functional unit and sold or used as an independent product, the function may also be stored in a computer-readable storage medium. Based on such an understanding, the technical solutions of the disclosure substantially or the parts making contributions to the conventional art or part of the technical solutions may be embodied in form of software product. The computer software product may be stored in a storage medium, including a plurality of instructions configured to enable a computer device (which may be a personal computer, a server, a network device or the like) to execute all or part of the operations of the method in each embodiment of the disclosure. The abovementioned storage medium may include: various media capable of storing program codes such as a U disk, a mobile hard disk, a ROM, a RAM, a magnetic disk or an optical disk.

The above are only the specific implementation modes of the disclosure and not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be subject to the scope of protection of the claims.

## Claims

1. A method for window adjustment, comprising:
receiving, by a first node, a first request message (Msg) from a second node; and
sending, by the first node, first indication information to the second node, wherein the first indication information is configured to indicate the second node to adjust a first time-domain window for monitoring first feedback information.

2. The method of claim 1, wherein sending, by the first node, the first indication information to the second node comprises:
sending, by the first node, the first indication information based on a first judgment condition.

3. The method of claim 2, wherein the first judgment condition comprises:
judging, by the first node, whether a channel is idle and/or available or not based on a listening result of energy of the channel, when the first node is required to occupy a first transmission resource for transmission of information with first priority.

4. The method of any one of claims 1-3, wherein sending, by the first node, the first indication information to the second node comprises:
sending, by the first node, the first indication information to the second node through downlink control information (DCI); or,
sending, by the first node, the first indication information to the second node through a downlink data channel scheduled by the DCI; or,
sending, by the first node, the first indication information to the second node by pre-configured sequence transmission.

5. The method of any one of claims 1-4, wherein a position where the first node sends the first indication information is a subset of candidate transmission positions corresponding to the first indication information.

6. The method of claim 5, wherein the candidate transmission positions corresponding to the first indication information have at least one of following features:
each of the candidate transmission positions of the first indication information has a periodic characteristic in time, and a period corresponding to each of the candidate transmission positions is determined based on a first parameter;
an offset of each of the candidate transmission positions of the first indication information relative to reference time in a period is determined based on a second parameter; and
a duration of each of the candidate transmission positions of the first indication information in a period is determined based on a third parameter.

7. The method of any one of claims 1-6, wherein the first request message comprises an Msg1 in a random access process.

8. The method of claim 7, wherein the first feedback information comprises an Msg2 in the random access process.

9. The method of claim 8, wherein configuration information of a control resource set (CORESET) and configuration information of search space for the Msg2 are adopted as configuration information of candidate transmission positions corresponding to the first indication information.

10. The method of any one of claims 1-6, wherein the first request message comprises an Msg3 in a random access process.

11. The method of claim 10, wherein the first feedback information comprises an Msg4 in the random access process.

12. The method of claim 11, wherein configuration information of a CORESET and configuration information of search space for the Msg4 are adopted as configuration information of candidate transmission positions corresponding to the first indication information.

13. A method for window adjustment, comprising:
sending, by a second node, a first request message (Msg) to a first node;
receiving, by the second node, first indication information from the first node;
adjusting, by the second node, a first time-domain window for monitoring first feedback information based on the first indication information; and
monitoring, by the second node, the first feedback information in the adjusted first time-domain window.

14. The method of claim 13, wherein receiving, by the second node, the first indication information from the first node comprises:
acquiring, by the second node, the first indication information through downlink control information (DCI); or,
acquiring, by the second node, the first indication information through a downlink data channel scheduled by the DCI; or,
acquiring, by the second node, the first indication information by pre-configured sequence transmission.

15. The method of claim 13 or 14, wherein a position where the second node receives the first indication information is a subset of candidate transmission positions corresponding to the first indication information.

16. The method of claim 15, wherein the candidate transmission positions corresponding to the first indication information have at least one of following features:
each of the candidate transmission positions of the first indication information has a periodic characteristic in time, and a period corresponding to each of the candidate transmission positions is determined based on a first parameter;
an offset of each of the candidate transmission positions of the first indication information relative to reference time in a period is determined based on a second parameter; and
a duration of each of the candidate transmission positions of the first indication information in a period is determined based on a third parameter.

17. The method of claim 15 or 16, further comprising:
obtaining, by the second node, information of all or part of the candidate transmission positions corresponding to the first indication information through broadcast information; or,
obtaining, by the second node, the information of all or part of the candidate transmission positions corresponding to the first indication information through radio resource control (RRC) dedicated signaling; or,
obtaining, by the second node, the information of all or part of the candidate transmission positions corresponding to the first indication information through pre-configured information.

18. The method of any one of claims 13-17, wherein adjusting, by the second node, the first time-domain window for monitoring the first feedback information based on the first indication information comprises:
re-enabling, by the second node, a first time-domain window configured to monitor the first feedback information, wherein the re-enabled first time-domain window has a first time-domain window length and the first time-domain window length is configured for the second node by the first node; or,
resetting, by the second node, a first time-domain window timer configured to monitor the first feedback information, wherein the reset first time-domain window timer has a first time-domain window timer length and the first time-domain window timer length is configured for the second node by the first node.

19. The method of any one of claims 13-17, wherein adjusting, by the second node, the first time-domain window for monitoring the first feedback information based on the first indication information comprises:
re-enabling, by the second node, a first time-domain window configured to monitor the first feedback information, wherein the re-enabled first time-domain window has a first time-domain window length and the first time-domain window length is determined based on a first time-domain window length presently used by the second node and a first coefficient; or,
resetting, by the second node, a first time-domain window timer configured to monitor the first feedback information, wherein the reset first time-domain window timer has a first time-domain window timer length and the first time-domain window timer length is determined based on a first time-domain window timer length presently used by the second node and a second coefficient.

20. The method of any one of claims 13-17, wherein adjusting, by the second node, the first time-domain window for monitoring the first feedback information based on the first indication information comprises:
extending, by the second node, a first time-domain window length presently used by the second node by k time units, k being a positive integer; or,
extending, by the second node, a first time-domain window timer length presently used by the second node by m time units, m being a positive integer.

21. The method of claim 20, wherein a granularity of the time unit is absolute time or a slot.

22. The method of any one of claims 19-21, wherein
the first time-domain window length presently used by the second node is obtained through broadcast information; or,
the first time-domain window length presently used by the second node is obtained through RRC dedicated signaling.

23. The method of any one of claims 19-22, wherein
the first time-domain window timer length presently used by the second node is obtained through broadcast information; or,
the first time-domain window timer length presently used by the second node is obtained through RRC dedicated signaling.

24. The method of any one of claims 13-23, wherein the first request message comprises an Msg1 in a random access (RA) process.

25. The method of claim 24, wherein the first feedback information comprises an Msg2 in the random access process.

26. The method of claim 25, wherein configuration information of a control resource set (CORESET) and configuration information of search space for the Msg2 are adopted as configuration information of candidate transmission positions corresponding to the first indication information.

27. The method of any one of claims 13-23, wherein the first request message comprises an Msg3 in a random access process.

28. The method of claim 27, wherein the first feedback information comprises an Msg4 in the random access process.

29. The method of claim 28, wherein configuration information of a CORESET and configuration information of search space for the Msg4 are adopted as configuration information of candidate transmission positions corresponding to the first indication information.

30. The method of any one of claims 13-29, further comprising:
continuing monitoring, by the second node, the first indication information in the adjusted first time-domain window.

31. The method of claim 30, further comprising:
adjusting again, by the second node, the first time-domain window configured to monitor the first feedback information, in response to the second node detecting new first indication information in the adjusted first time-domain window.

32. An apparatus for window adjustment, applied to a first node, the apparatus comprising:
a receiving unit, configured to receive a first request message (Msg) from a second node; and
a sending unit, configured to send first indication information to the second node, wherein the first indication information is configured to indicate the second node to adjust a first time-domain window for monitoring first feedback information.

33. The apparatus of claim 32, wherein the sending unit is configured to send the first indication information based on a first judgment condition.

34. The apparatus of claim 33, wherein the first judgment condition comprises:
judging, by the first node, whether a channel is idle and/or available or not based on a listening result of energy of the channel, when the first node is required to occupy a first transmission resource for transmission of information with first priority.

35. The apparatus of any one of claims 32-34, wherein the sending unit is configured to:
send the first indication information to the second node through downlink control information (DCI), or,
send the first indication information to the second node through a downlink data channel scheduled by the DCI, or,
indicate send the first indication information to the second node by pre-configured sequence transmission.

36. The apparatus of any one of claims 32-35, wherein a position where the sending unit sends the first indication information is a subset of candidate transmission positions corresponding to the first indication information.

37. The apparatus of claim 36, wherein the candidate transmission positions corresponding to the first indication information have at least one of following features:
each of the candidate transmission positions of the first indication information has a periodic characteristic in time, and a period corresponding to each of the candidate transmission positions is determined based on a first parameter;
an offset of each of the candidate transmission positions of the first indication information relative to reference time in a period is determined based on a second parameter; and
a duration of each of the candidate transmission positions of the first indication information in a period is determined based on a third parameter.

38. The apparatus of any one of claims 32-37, wherein the first request message comprises an Msg1 in a random access (RA) process.

39. The apparatus of claim 38, wherein the first feedback information comprises an Msg2 in the random access process.

40. The apparatus of claim 39, wherein configuration information of a control resource set (CORESET) and configuration information of search space for the Msg2 are adopted as configuration information of candidate transmission positions corresponding to the first indication information.

41. The apparatus of any one of claims 32-37, wherein the first request message comprises an Msg3 in a random access process.

42. The apparatus of claim 41, wherein the first feedback information comprises an Msg4 in the random access process.

43. The apparatus of claim 42, wherein configuration information of a CORESET and configuration information of search space for the Msg4 are adopted as the configuration information of candidate transmission positions corresponding to the first indication information.

44. An apparatus for window adjustment, applied to a second node, the apparatus comprising:
a sending unit, configured to send a first request message (Msg) to a first node;
a receiving unit, configured to receive first indication information from the first node; and
an adjustment unit, configured to adjust a first time-domain window for monitoring first feedback information based on the first indication information,
wherein the receiving unit is further configured to monitor the first feedback information in the adjusted first time-domain window.

45. The apparatus of claim 44, wherein the receiving unit is configured to acquire the first indication information through downlink control information (DCI), or, acquire the first indication information through a downlink data channel scheduled by the DCI, or, acquire the first indication information by pre-configured sequence transmission.

46. The apparatus of claim 44 or 45, wherein a position where the receiving unit receives the first indication information is a subset of candidate transmission positions corresponding to the first indication information.

47. The apparatus of claim 46, wherein the candidate transmission positions corresponding to the first indication information have at least one of following features:
each of the candidate transmission positions of the first indication information has a periodic characteristic in time, and a period corresponding to each of the candidate transmission positions is determined based on a first parameter;
an offset of each of the candidate transmission positions of the first indication information relative to reference time in a period is determined based on a second parameter; and
a duration of each of the candidate transmission positions of the first indication information in a period is determined based on a third parameter.

48. The apparatus of claim 46 or 47, further comprising: an acquisition unit configured to:
obtain information of all or part of the candidate transmission positions corresponding to the first indication information through broadcast information, or,
obtain the information of all or part of the candidate transmission positions corresponding to the first indication information through radio resource control (RRC) dedicated signaling, or,
obtain the information of all or part of the candidate transmission positions corresponding to the first indication information through pre-configured information.

49. The apparatus of any one of claims 44-48, wherein the adjustment unit is configured to:
re-enable a first time-domain window configured to monitor the first feedback information, wherein the re-enabled first time-domain window has a first time-domain window length and the first time-domain window length is configured for the second node by the first node, or,
reset a first time-domain window timer configured to monitor the first feedback information, wherein the reset first time-domain window timer has a first time-domain window timer length and the first time-domain window timer length is configured for the second node by the first node.

50. The apparatus of any one of claims 44-48, wherein the adjustment unit is configured to:
re-enable a first time-domain window configured to monitor the first feedback information, wherein the re-enabled first time-domain window has a first time-domain window length and the first time-domain window length is determined based on a first time-domain window length presently used by the second node and a first coefficient, or,
reset a first time-domain window timer configured to monitor the first feedback information, wherein the reset first time-domain window timer has a first time-domain window timer length and the first time-domain window timer length is determined based on a first time-domain window timer length presently used by the second node and a second coefficient.

51. The apparatus of any one of claims 44-48, wherein the adjustment unit is configured to:
extend a first time-domain window length presently used by the second node by k time units, k being a positive integer, or,
extend a first time-domain window timer length presently used by the second node by m time units, m being a positive integer.

52. The apparatus of claim 51, wherein a granularity of the time unit is absolute time or a slot.

53. The apparatus of any one of claims 50-52, wherein
the first time-domain window length presently used by the second node is obtained through broadcast information; or,
the first time-domain window length presently used by the second node is obtained through RRC dedicated signaling.

54. The apparatus of any one of claims 50-53, wherein
the first time-domain window timer length presently used by the second node is obtained through broadcast information; or,
the first time-domain window timer length presently used by the second node is obtained through RRC dedicated signaling.

55. The apparatus of any one of claims 44-54, wherein the first request message comprises an Msg1 in a random access (RA) process.

56. The apparatus of claim 55, wherein the first feedback information comprises an Msg2 in the random access process.

57. The apparatus of claim 56, wherein configuration information of a control resource set (CORESET) and configuration information of search space for the Msg2 are adopted as configuration information of candidate transmission positions corresponding to the first indication information.

58. The apparatus of any one of claims 44-54, wherein the first request message comprises an Msg3 in a random access process.

59. The apparatus of claim 58, wherein the first feedback information comprises an Msg4 in the random access process.

60. The apparatus of claim 59, wherein configuration information of a CORESET and configuration information of search space for the Msg4 are adopted as configuration information of candidate transmission positions corresponding to the first indication information.

61. The apparatus of any one of claims 44-60, wherein the receiving unit is further configured to continue monitoring the first indication information in the adjusted first time-domain window.

62. The apparatus of claim 61, wherein the adjustment unit is configured to adjust the first time-domain window configured to monitor the first feedback information again, in response to the receiving unit detecting new first indication information in the adjusted first time-domain window.

63. A network device, comprising a processor and a memory, wherein the memory is configured to store a computer program, and the processor is configured to call and run the computer program stored in the memory to execute the method of any one of claims 1-12.

64. A terminal, comprising a processor and a memory, wherein the memory is configured to store a computer program, and the processor is configured to call and run the computer program stored in the memory to execute the method of any one of claims 13-31.

65. A chip, comprising a processor, configured to call and run a computer program in a memory to cause a device provided with the chip to execute the method of any one of claims 1-12.

66. A chip, comprising a processor, configured to call and run a computer program in a memory to cause a device provided with the chip to execute the method of any one of claims 13-31.

67. A computer-readable storage medium, configured to store a computer program, the computer program causing a computer to execute the method of any one of claims 1-12.

68. A computer-readable storage medium, configured to store a computer program, and the computer program causing a computer to execute the method of any one of claims 13-31.

69. A computer program product, comprising a computer program instruction, the computer program instruction causing a computer to execute the method of any one of claims 1-12.

70. A computer program product, comprising a computer program instruction, the computer program instruction causing a computer to execute the method of any one of claims 13-31.

71. A computer program, causing a computer to execute the method of any one of claims 1-12.

72. A computer program, causing a computer to execute the method of any one of claims 13-31.
